# EUROPEAN PATENT APPLICATION

(11) **EP 4 578 709 A1**
(43) Date of publication of application: **02.07.2025**
(21) Application number: 24211068.2
(22) Date of filing: 06.11.2024
(51) Int. Cl.: B60L 50/60, B60L 53/24

(54) **DRIVE DEVICE**

(30) Priority: 05.12.2023 JP 2023205549
(71) Applicant: TOYOTA JIDOSHA KABUSHIKI KAISHA, Aichi-ken, 471-8571 (JP)
(72) Inventor: MASUDA, Yuto, Toyota-shi, 471-8571 (JP); NAKAGAMI, Soma, Toyota-shi, 471-8571 (JP); OKUDA, Koichi, Toyota-shi, 471-8571 (JP); MURASE, Eiji, Toyota-shi, 471-8571 (JP)
(74) Representative: TBK

(57) **Abstract**

A drive device (20;120) includes: an electric power supply circuit (11); a first heat circuit configured to perform heat exchange with a first electric motor; a second heat circuit configured to perform heat exchange with a second electric motor, at least a partial section of the second heat circuit being a section in common with the first heat circuit; a pump configured to cause a heat medium to circulate through the first heat circuit and the second heat circuit; and a pump control device (70) configured to control the pump. The pump control device (70) is configured to cause the heat medium to circulate through both the first heat circuit and the second heat circuit, by operating the pump in at least a part of a charging period during which the electric power supply circuit (11) supplies charging electric power to a neutral point (NP) of the first electric motor.

## Description

### BACKGROUND OF THE INVENTION

### 1. Field of the Invention

The technology disclosed in the present specification relates to a drive device for a vehicle.

### 2. Description of Related Art

In Japanese Unexamined Patent Application Publication No. 2016-205444, a drive device for a vehicle is described. The drive device includes two electric motors that drive right and left drive wheels.

### SUMMARY OF THE INVENTION

There is known a technology of supplying charging electric power to a neutral point of an electric motor and causing the electric motor and an electric power control device (typically, an inverter) to function as a booster circuit when an electric storage device of a vehicle is charged. In the case where this technology is applied to the drive device including the two electric motors, only a first electric motor is used for the charging, and charging electric power is given only to the first electric motor. As a result, at the time of the completion of the charging of the electric storage device, there can be a temperature difference between the first electric motor that has been used for the charging and a second electric motor that has not been used for the charging. The temperature of the electric motor influences the characteristic of the electric motor. Accordingly, when there is a large temperature difference between the first electric motor and the second electric motor, the traveling stability of the vehicle can decrease after the completion of the charging. The present specification provides a drive device that can reduce the temperature difference between the two electric motors including the first electric motor and the second electric motor even when heat generated in the first electric motor of the two electric motors during the charging of the electric storage device.

A drive device disclosed in the present specification is configured to drive a pair of right and left drive wheels of a vehicle. The drive device includes: a first electric motor configured to drive at least a first drive wheel of the pair of right and left drive wheels; a second electric motor configured to drive at least a second drive wheel of the pair of right and left drive wheels; a first electric power control device configured to control electric power between an electric storage device of the vehicle and at least the first electric motor; an electric power supply circuit electrically connected with a neutral point of the first electric motor and configured to supply charging electric power to the neutral point, the charging electric power being supplied from an external electric power source; a first heat circuit configured to perform heat exchange with the first electric motor; a second heat circuit configured to perform heat exchange with the second electric motor, at least a partial section of the second heat circuit being a section in common with the first heat circuit; at least one pump configured to cause a heat medium to circulate through the first heat circuit and the second heat circuit; and a pump control device configured to control the at least one pump. The pump control device is configured to cause the heat medium to circulate through both the first heat circuit and the second heat circuit, by operating the at least one pump in at least a part of a charging period during which the electric power supply circuit supplies the charging electric power to the neutral point of the first electric motor.

In the above-described drive device, during the charging of the electric storage device, the heat medium circulates through both the first heat circuit and the second heat circuit. The first heat circuit and the second heat circuit are configured to include the section in common with each other, and to share the heat medium. Thereby, the heat generated in the first electric motor is transmitted to the second electric motor through the shared heat medium. Thereby, the temperature difference between the first electric motor and the second electric motor is reduced even when heat is generated only in the first electric motor during the charging of the electric storage device.

In the drive device, the at least one pump may include a first pump configured to cause the heat medium to circulate through the first heat circuit, and a second pump configured to cause the heat medium to circulate through the second heat circuit. The pump control device may be configured to cause the heat medium to circulate through both the first heat circuit and the second heat circuit, by operating both the first pump and the second pump in at least a part of the charging period.

In the drive device, the pump control device may be configured to stop the operation of the second pump even in the charging period, when the temperature difference between the first electric motor and the second electric motor is less than a predetermined threshold.

In the drive device, the pump control device may be configured to stop the operation of the second pump even in the charging period, when the temperature of the second electric motor is higher than the temperature of the heat medium.

In the drive device, the pump control device may be configured to change the output of the second pump in the charging period, depending on the temperature difference between the first electric motor and the second electric motor.

The drive device may further include a casing that houses at least the first electric motor and the second electric motor. The at least partial section may be positioned in the casing.

The drive device may further include: a first heat exchanger provided on the first heat circuit and configured to perform heat exchange between the first heat circuit and a third heat circuit provided in the vehicle; and a second heat exchanger disposed on the second heat circuit and configured to perform heat exchange between the second heat circuit and the third heat circuit. The third heat circuit may be configured to pass through a radiator of the vehicle.

The drive device may further include: a first dynamic power transmission mechanism configured to transmit dynamic power of the first electric motor to at least the first drive wheel of the pair of right and left drive wheels; and a second dynamic power transmission mechanism configured to transmit dynamic power of the second electric motor to at least the second drive wheel of the pair of right and left drive wheels. The heat medium may be lubricating oil for a first gear of the first dynamic power transmission mechanism and a second gear of the second dynamic power transmission mechanism.

In the drive device, the first electric motor may be configured to drive the first drive wheel of the pair of right and left drive wheels, and the second electric motor may be configured to drive the second drive wheel of the pair of right and left drive wheels.

Details and further improvements of the technology disclosed in the present specification will be described in "DETAILED DESCRIPTION OF EMBODIMENTS" described later.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a block diagram of an electrified vehicle 10 that includes a drive device 20 in a first embodiment;
FIG. 2 shows a sectional view taken along line II-II in FIG. 1;
FIG. 3 shows a circuit diagram of the drive device 20;
FIG. 4 shows a flowchart of a process that is executed by a pump control device 70 of the drive device 20; and
FIG. 5 shows a sectional view of a drive device 120 in a second embodiment, similar to FIG. 2.

### DETAILED DESCRIPTION OF EMBODIMENTS

In an embodiment of the present disclosure, the at least one pump may include a first pump configured to cause the heat medium to circulate through the first heat circuit, and a second pump configured to cause the heat medium to circulate through the second heat circuit. In that case, the pump control device may cause the heat medium to circulate through both the first heat circuit and the second heat circuit, by operating both the first pump and the second pump in at least a part of the charging period.

In this configuration, a relatively small pump can be employed as the first pump and the second pump, compared to a configuration in which a single pump causes the heat medium to circulate through both the first heat circuit and the second heat circuit. Thereby, it is possible to restrain the electric power consumption for the circulation of the heat medium, for example, by operating only the first pump when it is only necessary to cause the heat medium to circulate through the first heat circuit.

In an embodiment of the present disclosure, the pump control device may stop the operation of the second pump even in the charging period, when the temperature difference between the first electric motor and the second electric motor is less than a predetermined threshold.

In this configuration, it is possible to restrain the electric power consumption for the circulation of the heat medium, by prohibiting the operation of the second pump when there is no significant temperature difference between the two electric motors and it is not necessary to transmit the heat of the first electric motor to the second electric motor.

In an embodiment of the present disclosure, the pump control device may stop the operation of the second pump even in the charging period, when the temperature of the second electric motor is higher than the temperature of the heat medium.

In this configuration, it is possible to restrain the electric power consumption for the circulation of the heat medium, by prohibiting the operation of the second pump when the temperature of the second electric motor is relatively high and it is not necessary to transmit the heat of the first electric motor to the second electric motor.

In an embodiment of the present disclosure, the pump control device may change the output of the second pump in the charging period, depending on the temperature difference between the first electric motor and the second electric motor.

In this configuration, the pump control device can increase the output of the second pump, for example, when the temperature difference between the first electric motor and the second electric motor is large. Thereby, it is possible to quickly decrease the temperature difference between the first electric motor and the second electric motor, compared to a configuration in which the second pump is controlled to have a constant output.

In an embodiment of the present disclosure, the drive device may further include a casing that houses at least the first electric motor and the second electric motor. In that case, the at least partial section that is included in the first heat circuit and the second heat circuit in common may be positioned in the casing.

In this configuration, for example, a heat medium pool that is formed at a lower portion of the casing can be adopted as the common section between the first heat circuit and the second heat circuit.

In an embodiment of the present disclosure, the drive device may further include: a first heat exchanger that is positioned on the first heat circuit between the at least one pump and the first electric motor; a second heat exchanger that is positioned on the second heat circuit between the at least one pump and the second electric motor; and a third heat circuit that connects the first heat exchanger and the second heat exchanger. In the third heat circuit, a different heat medium from the heat medium that passes through a radiator of the vehicle may circulate.

In this configuration, it is possible to cool the heat medium that circulates through the first heat circuit and the second heat circuit, using the different heat medium cooled by the radiator of the vehicle. Thereby, it is possible to release the heat generated in the first electric motor to the outside, while restraining the temperature difference between the first electric motor and the second electric motor.

In an embodiment of the present disclosure, the heat medium may be lubricating oil for the first electric motor and the second electric motor.

Thereby, it is possible to decrease the temperature difference between the first electric motor and the second electric motor, and to reduce the frictional force that is generated in each electric motor.

In an embodiment of the present disclosure, the first electric motor may drive the first drive wheel of the pair of right and left drive wheels, and the second electric motor may drive the second drive wheel of the pair of right and left drive wheels. In another embodiment, the first electric motor and the second electric motor may drive both of the pair of right and left drive wheels.

### First Embodiment

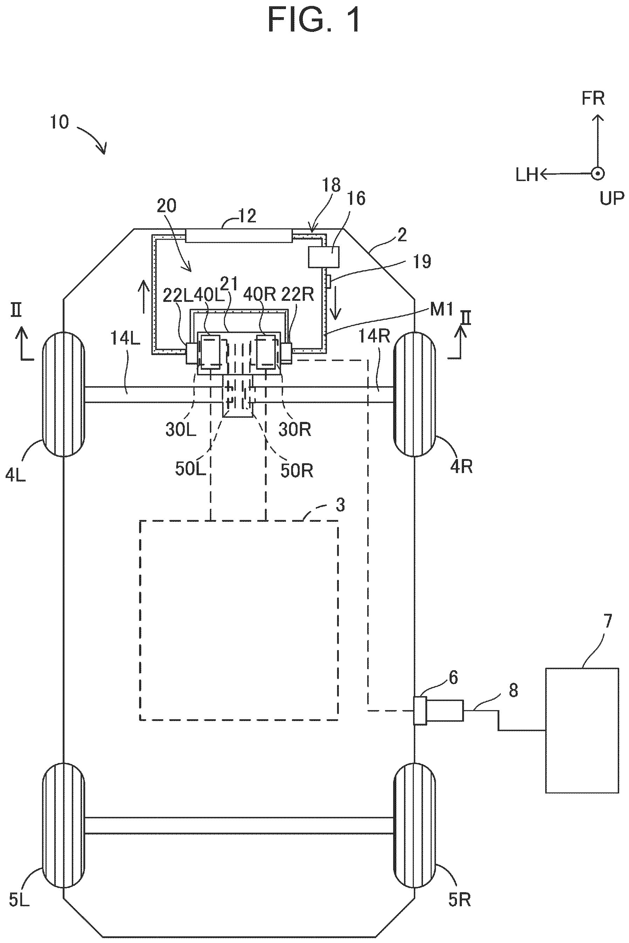

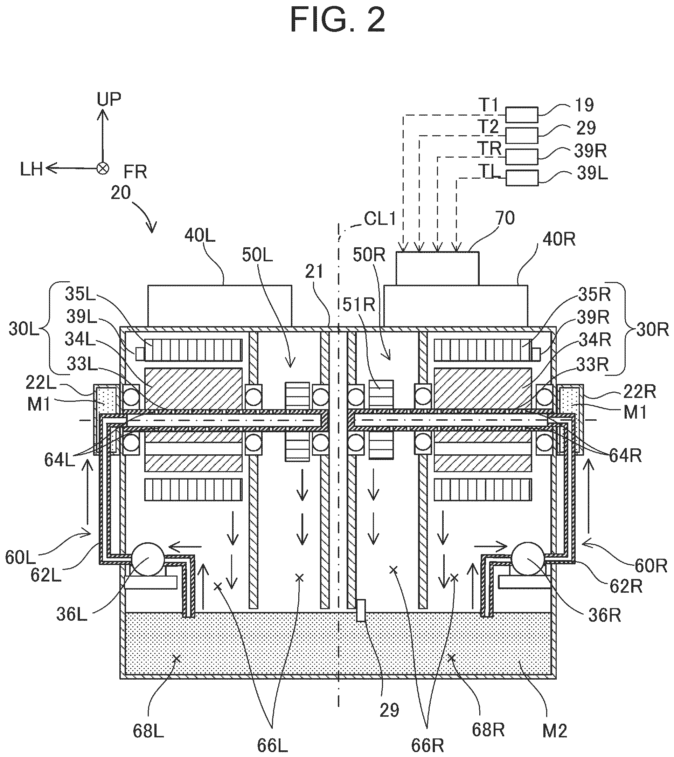

FIG. 1 is a block diagram of an electrified vehicle 10 including a drive device 20 in a first embodiment as viewed from above. FIG. 2 is a sectional view taken along line II-II in FIG. 1. In the present specification, the forward side (that is, the upper side on the sheet plane of FIG. 1) of the electrified vehicle 10 is sometimes denoted as merely "front", and the opposite side of the forward side is sometimes denoted as merely "rear". Furthermore, the leftward side (that is, the left side on the sheet plane of FIG. 1) of the electrified vehicle 10 is sometimes denoted as merely "left", and the opposite side of the leftward side is sometimes denoted as merely "right". Further, the upward side (that is, the near side of the sheet plane of FIG. 1) of the electrified vehicle 10 is sometimes denoted as merely "upper", and the opposite side of the upward direction is sometimes denoted as merely "lower".

The electrified vehicle 10 includes a vehicle body 2, a pair of right and left front wheels 4R, 4L, a pair of right and left rear wheels 5R, 5L, a charging inlet 6, a radiator 12, a radiator pump 16, a radiator heat circuit 18, and the drive device 20. The drive device 20 includes a casing 21, a pair of right and left electric motors 30R, 30L, a pair of right and left dynamic power transmission mechanisms 50R, 50L, a pair of right and left oil coolers 22R, 22L, and a pair of right and left inverters 40R, 40L. Hereinafter, the description "a pair of right and left" is sometimes as described as merely "a pair".

The drive device 20 supplies the electric power of a battery pack 3 to the pair of electric motors 30R, 30L, and thereby, drives the pair of front wheels 4R, 4L. Thereby, the electrified vehicle 10 is driven. That is, the pair of front wheels 4R, 4L serves as drive wheels (the first drive wheel and the second drive wheel) of the electrified vehicle 10. In a modification, the pair of rear wheels 5R, 5L may serve as drive wheels (the first drive wheel and the second drive wheel) of the electrified vehicle 10, or the pair of front wheels 4R, 4L and the pair of the rear wheels 5R, 5L may serve as drive wheels (the first drive wheel and the second drive wheel) of the electrified vehicle 10. Examples of the "electrified vehicle" in the present specification include a rechargeable battery electric vehicle that is charged by an external electric power source, a fuel cell electric vehicle that includes a fuel cell as an electric power source, and a hybrid electric vehicle that also includes an engine.

The casing 21 houses the pair of electric motors 30R, 30L and the pair of dynamic power transmission mechanisms 50R, 50L. The pair of inverters 40R, 40L is disposed on an upper surface of the casing 21. The right dynamic power transmission mechanism 50R transmits the dynamic power of the right electric motor 30R, to a right drive shaft 14R that is connected to the right front wheel 4R. The right dynamic power transmission mechanism 50R includes gears, bearings, and others. For example, the right dynamic power transmission mechanism 50R functions as a speed reducer that reduces the rotation speed of the right electric motor 30R and that rotates the right drive shaft 14R. Similarly, the left dynamic power transmission mechanism 50L transmits the dynamic power of the left electric motor 30L, to a left drive shaft 14L that is connected to the left front wheel 4L. As shown in FIG. 1, the right drive shaft 14R and the left drive shaft 14L are separated at the center in the right-left direction of the electrified vehicle 10. Therefore, the pair of front wheels 4R, 4L is independently driven by the pair of electric motors 30R, 30L. In a modification, the drive shafts 14R, 14L are connected at a central portion. In that case, the two electric motors 30R, 30L may drive the pair of front wheels 4R, 4L.

The charging inlet 6 is disposed on a right side surface of the vehicle body 2. The charging inlet 6 is configured to be connected to an external electric power source 7 (for example, a charging stand) through an electric power cable 8. When the charging inlet 6 is connected with the external electric power source 7, the charging electric power of the external electric power source 7 is supplied to the battery pack 3,

The radiator 12 is disposed at a front end of the vehicle body of the electrified vehicle 10. The radiator 22 is a device that performs heat exchange between a heat medium M1 (for example, antifreeze liquid) that circulates through the radiator heat circuit 18 and external air. For example, the radiator 12 cools the heat medium M1, using traveling wind that enters the interior of the vehicle body 2 when the electrified vehicle 10 travels. The radiator pump 16 causes the heat medium M1 to circulate through the radiator heat circuit 18. As shown by arrows in FIG. 1, the heat medium M1 fed by the radiator pump 16 passes through the right oil cooler 22R and the left oil cooler 22L, and returns to the radiator 12. In this way, the radiator heat circuit 18 is a circuit that connects the oil coolers 22R, 22L and that causes the heat medium M1 to circulate through the oil coolers 22R, 22L. Further, a temperature sensor 19 that acquires the temperature of the heat medium M1 in the radiator heat circuit 18 is provided rearward of the radiator pump 16.

A detailed structure of the drive device 20 will be described with reference to FIG. 2. In addition to the pair of electric motors 30R, 30L and others described above, the drive device 20 further includes a pair of oil pumps 36R, 36L housed in the casing 21, a pair of motor heat circuits 60R, 60L, a temperature sensor 29, and a pump control device 70. The drive device 20 is configured to be symmetric with respect to a central line CL1. Therefore, hereinafter, a configuration positioned rightward of the central line CL1 of the drive device 20 will be mainly described.

The right electric motor 30R includes a motor shaft 33R, a rotor 34R, a stator 35R, and a temperature sensor 39R. The motor shaft 33R penetrates through the rotor 34R, and extends in the right-left direction. The motor shaft 33R extends leftward beyond a left end of the rotor 34R, and is connected with a gear 51R of the right dynamic power transmission mechanism 50R. When the rotor 34R rotates and thereby the motor shaft 33R rotates, the gear 51R rotates. Although not illustrated, the gear 51R rotates the right drive shaft 14R (see FIG. 1) through a plurality of gears. That is, the right dynamic power transmission mechanism 50R transmits the dynamic power of the right electric motor 30R to the right drive shaft 14R. The motor shaft 33R has a hollow structure. A plurality of through-holes 64R is formed on a side surface of the motor shaft 33R. The plurality of through-holes 64R provides communication between an internal space of the motor shaft 33R and an internal space of the casing 21. In FIG. 2, reference characters are provided only to two through-holes 64R that are of the plurality of through-holes 64R and that are positioned at a right end. and the reference characters of the other through-holes 64R are omitted. Similarly, the left dynamic power transmission mechanism 50L transmits the dynamic power of the left electric motor 30L to the left drive shaft 14L through gears such as a gear 51L that is connected to a motor shaft 33L of the left electric motor 30L.

The right oil pump 36R is fixed to a right side wall of the casing 21 from the inside. The right oil pump 36R is a pump that feeds a heat medium M2 to the right motor heat circuit 60R. The right motor heat circuit 60R includes a right pipe 62R, the motor shaft 33R, a space 66R, and a reservoir 68R. The right pipe 62R includes an upstream portion that extends upward from the reservoir 68R, that bends rightward and that is connected to the right oil pump 36R, and a downstream portion that is connected to a discharge port of the right oil pump 36R and that extends upward on the outside of the right side wall of the casing 21. An upper end of the downstream portion of the right pipe 62R passes through the right oil cooler 22R, and is connected to the motor shaft 33R. The reservoir 68R is a space that is positioned at a lower portion of the casing 21 and that retains the heat medium M2. The reservoir 68R is a so-called heat medium pool. The right oil pump 36R sucks up the heat medium M2 retained in the reservoir 68R, and feeds the heat medium M2 toward the motor shaft 33R through the right pipe 62R. The heat medium M2 drops in the space 66R of the casing 21 through the internal space and through-holes 64R of the motor shaft 33R, and reaches the reservoir 68R again. In this way, the right motor heat circuit 60R causes the heat medium M2 to circulate. Similarly, the left motor heat circuit 60L causes the heat medium M2 to circulate through a left pipe 62L that extends upward along an outer surface of a left side wall of the casing 21, the motor shaft 33L, through-holes 64L, and a space 66L.

The heat medium M2 discharged from the through-holes 64R of the motor shaft 33R attaches to the surface of the rotor 34R of the right electric motor 30R and the surface of the gear 51R of the right dynamic power transmission mechanism 50R. The heat medium M2 is lubricating oil for the right electric motor 30R and gears (for example, the gear 51R) of the right dynamic power transmission mechanism 50R. Therefore, the heat medium M2 reduces the frictional force that is generated on the surfaces of the rotor 34R and the gear 51R. Furthermore, the heat medium M2 absorbs heat, particularly, from the right electric motor 30R, when the heat medium M2 circulates through the right motor heat circuit 60R. That is, the heat medium M2 cools the right electric motor 30R. In this way, the right motor heat circuit 60R performs heat exchange with the right electric motor 30R, by causing the heat medium M2 to circulate.

As described above, the right pipe 62R passes through the interior of the right oil cooler 22R, and is connected to the motor shaft 33R. That is, it can be said that the right oil cooler 22R is provided on the right motor heat circuit 60R. Further, in the right oil cooler 22R, the heat medium M1 having passes through the radiator 12 (see FIG. 1) circulates. Therefore, the right oil cooler 22R performs heat exchange between the right pipe 62R of the right motor heat circuit 60R and the radiator heat circuit 18. In other words, the right oil cooler 22R transmits the heat of the heat medium M2 in the right pipe 62R, to the heat medium M1. Thereby, the heat medium M2 is cooled by the heat medium M1. Thereby, the rise in the temperature of the heat medium M2 that is absorbed from the right electric motor 30R is restrained. Therefore, it is possible to release the heat generated in the right electric motor 30R, to the outside of the electrified vehicle 10.

Similarly, the left oil pump 36L causes the heat medium M2 to circulate through the left motor heat circuit 60L. That is, the heat medium M2 is lubricating oil for the left electric motor 30L and gears (for example, the gear 51L) of the left dynamic power transmission mechanism 50L. A reservoir 68L of the left motor heat circuit 60L communicates with the reservoir 68R of the right motor heat circuit 60R. That is, the reservoirs 68R, 68L constitute a common section between the right motor heat circuit 60R and the left motor heat circuit 60L. Thereby, the heat medium M2 circulating through the right motor heat circuit 60R and the heat medium M2 circulating through the left motor heat circuit 60L are mixed in the reservoirs 68R, 68L. Therefore, the heat medium M2 in the right pipe 62R and the heat medium M2 in the left pipe 62L have almost the same temperature. In this way, in the embodiment, the reservoirs 68R, 68L formed at the lower portion of the casing 21 can be adopted as the common section between the right motor heat circuit 60R and the left motor heat circuit 60L. Furthermore, it is possible to shorten the right motor heat circuit 60R and the left motor heat circuit 60L, compared to a configuration in which a separate pipe shared by the motor heat circuits 60R, 60L is positioned on the exterior of the casing 21.

The temperature sensor 39R is disposed on a right side surface of the stator 35R of the right electric motor 30R. The temperature sensor 39R acquires the temperature of the right electric motor 30R (for example, the stator 35R). Further, a lower end of the temperature sensor 29 disposed at a lower portion of the center of the casing 21 in the right-left direction is disposed in the heat medium M2 retained in the reservoir 68R. The temperature sensor 29 acquires the temperature of the heat medium M2 retained in the reservoir 68R.

The pump control device 70 is disposed above the right inverter 40R. The pump control device 70 is a computer that includes a CPU and a memory, and can communicate with the temperature sensors 19, 29, 39R, 39L and the pumps 16, 36R, 36L, for example. The pump control device 70 acquires a temperature T1 of the heat medium M1 from the temperature sensor 19. Similarly, the pump control device 70 acquires a temperature T2 of the heat medium M2 from the temperature sensor 29, acquires a temperature TR of the right electric motor 30R from the temperature sensor 39R, and acquires a temperature TL of the left electric motor 30L from the temperature sensor 39L. For example, the pump control device 70 controls behaviors of the pumps 16, 36R, 36L based on the temperatures T1, T2, TR, TL acquired from the temperature sensors 19, 29, 39R, 39L, respectively. In a modification, the pump control device 70 may be disposed on any side surface of the right side, left side, front side and rear side of the right inverter 40R. Furthermore, the number of pump control devices 70 is not limited to one, and for example, pump control devices 70 may be disposed on both of the right side surface and left side surface of the right inverter 40R.

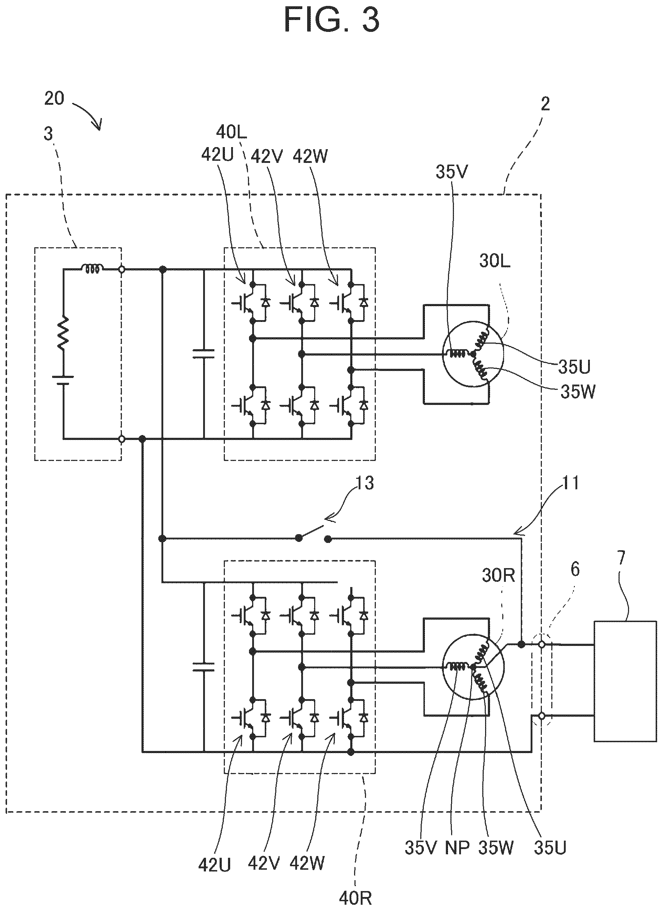

With reference to FIG. 3, an electric circuit of the drive device 20 will be described. As shown in FIG. 3, the drive device 20 further includes an electric power supply circuit 11. The electric power supply circuit 11 is a circuit for supplying direct-current charging electric power supplied from the external electric power source 7, to the battery pack 3. The electric motor 30R is a three-phase motor that includes a U-phase coil 35U, a V-phase coil 35V, and a W-phase coil 35W. One end of each of the U-phase coil 35U, the V-phase coil 35V and the W-phase coil 35W is connected to a neutral point NP. The other end of the U-phase coil 35U is connected to a U-phase arm 42U, the other end of the V-phase coil 35V is connected to a V-phase arm 42V, and the other end of the W-phase coil 35W is connected to a W-phase arm 42W.

In the electric power supply circuit 11 in the embodiment, one terminal of the charging inlet 6 is connected with a positive electrode of the battery pack 3 through the neutral point NP of the right electric motor 30R and the right inverter 40R. That is, the electric power supply circuit 11 supplies the charging electric power supplied from the external electric power source 7, to the neutral point NP of the right electric motor 30R. Further, the other terminal of the charging inlet 6 is connected with a negative electrode of the battery pack 3 through the right inverter 40R. The electric power supply circuit 11 supplies the charging electric power to the battery pack 3 through the neutral point NP of the right electric motor 30R. Thereby, the right electric motor 30R and the right inverter 40R can function as three booster circuits that are connected in parallel between the charging inlet 6 and the battery pack 3. Thereby, the drive device 20 can boost the output voltage of the external electric power source 7, using the right electric motor 30R and the right inverter 40R. Thereby, even if the output voltage of the external electric power source 7 is lower than the voltage of the battery pack 3, it is possible to execute rapid charging. Further, the one terminal of the charging inlet 6 is connected directly with the positive electrode of the battery pack 3 through a switch 13. When the output voltage of the external electric power source 7 is equivalent to the voltage of the battery pack 3, the electric power supply circuit 11 can cause the output voltage of the external electric power source 7 to bypass the neutral point NP of the right electric motor 30R, by turning the switch 13 on. Although not illustrated, the electric power supply circuit 11 further includes a charging unit that includes a relay, a capacitor, and the like. The charging unit is connected with the neutral point NP and the right inverter 40.

While the charging inlet 6 is connected with the external electric power source 7 and the charging electric power of the external electric power source 7 is supplied to the neutral point NP of the right electric motor 30R, electric current flows through the coils 35U, 35V, 35W in the respective phases of the right electric motor 30R. Thereby, heat is generated in the coils 35U, 35V, 35W in the respective phases, and the temperature TR of the right electric motor 30R rises. On the other hand, even when the charging inlet 6 is connected with the external electric power source 7, electric current does not flow through the coils 35U, 35V, 35W in the respective phases of the left electric motor 30L, and therefore, the temperature TL of the left electric motor 30L does not rise. That is, while the charging electric power of the external electric power source 7 is supplied to the neutral point NP of the right electric motor 30R, the temperature difference between the electric motors 30R, 30L increases. The temperatures TR, TL of the electric motors 30R, 30L influence the characteristics of the electric motors 30R, 30L. Therefore, when the temperature difference between the electric motors 30R, 30L becomes larger than a predetermined value, the traveling stability of the electrified vehicle 10 after the supply of the charging electric power can decrease.

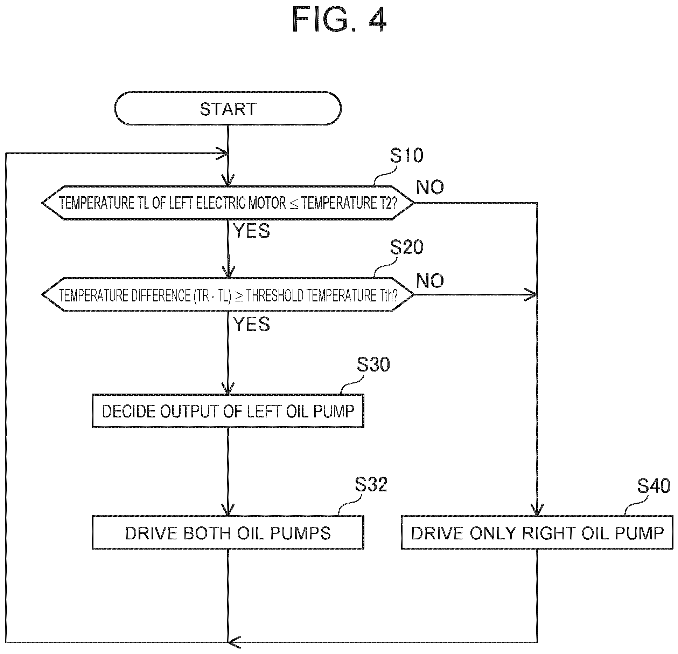

With reference to FIG. 4, a process that is executed by the pump control device 70 of the drive device 20 will be described. The process in FIG. 4 is started at the time when the charging inlet 6 is connected with the external electric power source 7 and the switch 13 (see FIG. 3) is turned off. The pump control device 70 repeats the process in FIG. 4, while the charging inlet 6 is connected with the external electric power source 7. Hereinafter, a period during which the charging inlet 6 is connected with the external electric power source 7 and the switch 13 (see FIG. 3) is in the off-state is sometimes referred to as "charging period".

In S 10, the pump control device 70 compares the temperature TL of the left electric motor 30L that is acquired from the temperature sensor 39L and the temperature T2 of the heat medium M2 that is acquired from the temperature sensor 29, and determines whether the temperature TL is equal to or lower than the temperature T2. The pump control device 70 proceeds to S20 when the temperature TL is equal to or lower than the temperature T2 (YES in S10), and proceeds to S40 when the temperature TL is higher than the temperature T2 (NO in S 10).

In S20, the pump control device 70 compares the temperature difference between both electric motors 30R, 30L (that is, the difference between the temperature TR and the temperature TL), and a threshold temperature Tth. The threshold temperature Tth is a value for determining whether the temperature difference between both electric motors 30R, 30L influences the traveling stability of the electrified vehicle 10, and is previously stored in the memory (not illustrated) of the pump control device 70. In a modification, the threshold temperature Tth may be a value that is automatically specified by the pump control device 70 depending on specifications of both electric motors 30R, 30L, or may be a value that can be changed afterward by a worker at the time of the maintenance of the electrified vehicle 10.

The pump control device 70 proceeds to S30 when the temperature difference is larger than the threshold temperature Tth (YES in S20), and proceeds to S40 when the temperature difference is equal to or smaller than the threshold temperature Tth (NO in S20).

In S30, the pump control device 70 decides the output of the left oil pump 36L during the charging period. In S30, the pump control device 70 decides the output of the left oil pump 36L depending on the temperature difference calculated in S20. Although not illustrated, the pump control device 70 stores, for example, a table in which the temperature difference between both electric motors 30R, 30L and the output of the left oil pump 36L are associated. In the table, the value of the temperature difference and the value of the output are stored so as to be roughly proportional to each other. Based on the table, the pump control device 70 decides the output of the left oil pump 36L, using the temperature difference calculated in S20. In a modification, the pump control device 70 may store a calculation formula for calculating the output of the left oil pump 36L based on the temperature difference. In the modification, based on this calculation formula, in S30, the pump control device 70 may decide the output of the left oil pump 36L during the charging period.

In S32, the pump control device 70 drives both oil pumps 36R, 36L. The pump control device 70 drives the right oil pump 36R at a predetermined output that is previously stored. On the other hand, the pump control device 70 drives the left oil pump 36L at the output decided in S30. In this way, the pump control device 70 decides the output of the left oil pump 36L, based on the temperature difference between both electric motors 30R, 30L. For example, when the temperature difference is large, the pump control device 70 drives the left oil pump 36L at a high output. Therefore, it is possible to quickly decrease the temperature difference between both electric motors 30R, 30L, compared to a configuration in which the left oil pump 36L is driven at a constant output. Furthermore, when the temperature difference is small, the pump control device 70 drives the left oil pump 36L at a low output. Therefore, it is possible to prevent the left oil pump 36L from being driven at an excessive output when the temperature difference is small. Thereby, it is possible to restrain the electric power consumption of the drive device 20.

In S40, the pump control device 70 drives only the right oil pump 36R at a predetermined output that is previously stored. In S40, the pump control device 70 stops the operation of the left oil pump 36L. When the temperature TL of the left electric motor 30L is higher than the temperature T2 of the heat medium M2 (NO in S 10), the temperature TL of the left motor heat circuit 60L does not rise even if the heat medium M2 circulates through the left motor heat circuit 60L. That is, in this case, even when the left oil pump 36L is driven, the temperature difference between both electric motors 30R, 30L does not decrease. That is, in this case, it is not necessary to transmit the heat of the right electric motor 30R to the left electric motor 30L. In the drive device 20 in the embodiment, it is possible to restrain the electric power consumption for the circulation of the heat medium M2, by prohibiting the operation of the left oil pump 36L when the temperature TL of the left electric motor 30L is higher than the temperature T2 of the heat medium M2 (NO in S 10).

Furthermore, also when the temperature difference between both electric motors 30R, 30L is smaller than the threshold temperature Tth (NO in S20), the pump control device 70 stops the operation of the left oil pump 36L. When the temperature difference between both electric motors 30R, 30L is smaller than the threshold temperature Tth, a further decrease in the temperature difference between both electric motors 30R, 30L is difficult even when the heat medium M2 circulates through the left motor heat circuit 60L. That is, in this case, there is no significant temperature difference between both electric motors 30R, 30L, and it is not necessary to transmit the heat of the right electric motor 30R to the left electric motor 30L. In the drive device 20 in the embodiment, it is possible to restrain the electric power consumption for the circulation of the heat medium M2, by stopping the operation of the left oil pump 36L when the temperature difference between both electric motors 30R, 30L is smaller than the threshold temperature Tth (NO in S20).

As described above, in the drive device 20 in the embodiment, the heat medium M2 circulates through both the right motor heat circuit 60R and the left motor heat circuit 60L during the charging period when the battery pack 3 is charged. The right motor heat circuit 60R and the left motor heat circuit 60L include the reservoirs 68R, 68L in common with each other, and share the heat medium M2. Therefore, the heat generated in the right motor heat circuit 60R by the charging electric power is transmitted to the left motor heat circuit 60L through the shared heat medium M2. Thereby, even when heat is generated only in the right electric motor 30R during the charging period, the temperature difference between both electric motors 30R, 30L is reduced. Thereby, it is possible to restrain the decrease in the traveling stability of the electrified vehicle 10 after the completion of the charging.

### Correspondence Relation

The right electric motor 30R is an example of the "first electric motor". The left electric motor 30L is an example of the "second electric motor". The battery pack 3 is an example of the "electric storage device". The right inverter 40R is an example of the "first electric power control device". The right motor heat circuit 60R is an example of the "first heat circuit". The left motor heat circuit 60L is an example of the "second heat circuit". The radiator heat circuit 18 is an example of the "third heat circuit". The right oil pump 36R is an example of the "first pump". The left oil pump 36L is an example of the "second pump". The right oil cooler 22R is an example of the "first heat exchanger". The left oil cooler 22L is an example of the "second heat exchanger". The right dynamic power transmission mechanism 50R is an example of the "first dynamic power transmission mechanism". The left dynamic power transmission mechanism 50L is an example of the "second dynamic power transmission mechanism".

### Second Embodiment

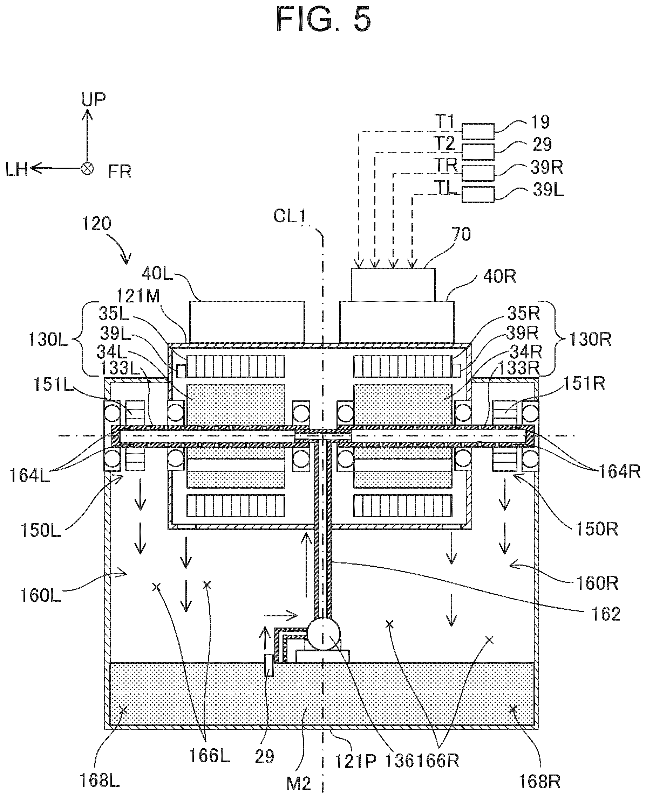

A detailed structure of a drive device 120 in a second embodiment will be described with reference to FIG. 5. In the drive device 120 in the embodiment, a path through which the heat medium M2 circulate is different from that in the drive device 20 in the above-described first embodiment. In the drive device 120 in the embodiment, the heat medium M2 circulates by a single oil pump 136. Except this, the drive device 120 in the embodiment has the same configuration as the drive device 20 in the first embodiment.

In the drive device 120 in the embodiment, a pair of electric motors 130R, 130L is housed in a motor casing 121M, so as to be adjacent in the right-left direction. Further, a pair of dynamic power transmission mechanisms 150R, 150L is disposed on vehicle outsides of the pair of electric motors 130R, 130L. A motor shaft 133R of the right electric motor 130R penetrates through a rightward side wall of the motor casing 121M, and is connected with a gear 151R of the right dynamic power transmission mechanism 150R. Similarly, a motor shaft 133L of the left electric motor 130L penetrates through a leftward side wall of the motor casing 121M, and is connected with a gear 151L of the left dynamic power transmission mechanism 150L. The pair of dynamic power transmission mechanisms 150R, 150L is housed in a pump casing 121P. The pump casing 121P supports the motor casing 121M from below. As shown in FIG. 5, the heat medium M2 is retained in a bottom portion of the pump casing 121P. That is, the bottom portion of the pump casing 121P forms reservoirs 168R, 168L.

In the drive device 120 in the embodiment, the single oil pump 136 is disposed at a central portion of the pump casing 121P in the right-left direction. The oil pump 136 feeds the heat medium M2 retained in the reservoirs 168R, 168L, to a pipe 162 that is disposed at the center of the pump casing 121P and that extends upward. The pipe 162 diverges at an upper end rightward and leftward, and is connected to the motor shafts 133R, 133L. In the embodiment, the single oil pump 136 supplies the heat medium M2 retained in the bottom portion of the pump casing 121P, to both the motor shaft 133R of the right electric motor 130R and the motor shaft 133L of the left electric motor 130L, through the pipe 162. Similarly to the motor shaft 33R in the first embodiment, a plurality of through-holes 164R, 164L is formed on side surfaces of the motor shafts 133R, 133L.

In the right motor heat circuit 160R in the embodiment, by the oil pump 136, the heat medium M2 retained in the reservoir 168R is supplied to the right electric motor 130R and the right dynamic power transmission mechanism 150R, through the pipe 162 and the motor shaft 133R of the right electric motor 130R. A communication hole that provides communication between a space in the motor casing 121M and a space 166R in the pump casing 121P is formed at a right end portion of a lower surface of the motor casing 121M. Therefore, the heat medium M2 supplied to the right electric motor 130R drops from the right electric motor 130R. Thereafter, the heat medium M2 drops to the space 166R through the communication hole, and reaches the reservoir 168R again. Furthermore, the heat medium M2 supplied to the right dynamic power transmission mechanism 150R through a plurality of through-holes 164R of the motor shaft 133R drops in the space 166R of the pump casing 121P, and reaches the reservoir 168R again. In this way, the right motor heat circuit 160R causes the heat medium M2 to circulate. In the left motor heat circuit 160L, by the oil pump 136, the heat medium M2 retained in the reservoir 168L is supplied to the left electric motor 130L and the left dynamic power transmission mechanism 150L, through the pipe 162 and the motor shaft 133L of the left electric motor 130L. A communication hole that provides communication between a space in the motor casing 121M and a space 166L in the pump casing 121P is formed at a left end portion of a lower surface of the motor casing 121M. Therefore, similarly to the right motor heat circuit 160R, the heat medium M2 circulates through the left motor heat circuit 160L.

Further, the reservoirs 168R, 168L communicate with each other in the pump casing 121P. Furthermore, the motor heat circuits 160R, 160L include the identical pipe 162. That is, the motor heat circuits 160R, 160L include the section (that is, the pipe 162 and the reservoirs 168R, 168L) in common with each other. In the drive device 120 in the embodiment, the pump control device 70 drives the oil pump 136 over the charging period when the battery pack 3 is charged. Thereby, the heat medium M2 circulates through both the right motor heat circuit 160R and the left motor heat circuit 160L, during the charging period when the battery pack 3 is charged. Therefore, the heat generated in the right motor heat circuit 160R by the charging electric power is transmitted to the left motor heat circuit 160L through the shared heat medium M2. Thereby, even when heat is generated only in the right electric motor 130R during the charging period, the temperature difference between both electric motors 130R, 130L is reduced. Thereby, it is possible to restrain the decrease in the traveling stability of the electrified vehicle 10 after the completion of the charging. In the embodiment, the pipe 162 and the reservoirs 168R, 168L constitute an example of the "at least partial section". Further, unlike the first embodiment, in the embodiment, the oil pump 136 is driven over the charging period, regardless of whether the temperature of the left electric motor 130L is lower than the temperature T2 of the heat medium M2 and whether the temperature difference between both electric motors 130R, 130L is higher than the threshold temperature Tth. That is, in the embodiment, the processes of S10 and S20 in FIG. 4 can be skipped. However, in a modification, the pump control device 70 may change whether to feed the heat medium M2 to the left motor heat circuit 160L, by controlling a valve that is provided at a discharge portion of the oil pump 136. In the modification, at least one process of the processes of S10 to S30 in FIG. 4 may be executed.

Specific examples of the technology disclosed in the present specification have been described above in detail. They are just examples, and do not limit the claims. The technology described in the claims includes various modifications and alterations of the above-described specific examples. Modifications of the above embodiments will be described below.

Note points of the embodiments will be described below. The drive device 20 may exclude the left inverter 40L. In that case, for example, the single inverter 40R may be connected with both electric motors 30R, 30L.

The pump control device 70 may avoid the execution of the process of S10 in FIG. 4. That is, the pump control device 70 may drive the left oil pump 36L, regardless of whether the temperature TL of the left motor heat circuit 60L is equal to or lower than the temperature T2 of the heat medium M2.

The pump control device 70 may avoid the execution of the process of S20 in FIG. 4. That is, the pump control device 70 may drive the left oil pump 36L, regardless of whether the temperature difference between both electric motors 30R, 30L is equal to or larger than the threshold temperature Tth.

The pump control device 70 may avoid the execution of the process of S30 in FIG. 4. That is, it is not necessary to decide the output of the left oil pump 36L depending on the temperature difference between both electric motors 30R, 30L. In this case, in S32, the pump control device 70 may drive the left oil pump 36L, for example, at the same output as the output of the right oil pump 36R.

Both electric motors 30R, 30L may be cooled by the heat medium M1. In that case, for example, the first heat circuit and second heat circuit through which the heat medium M1 circulates may be disposed around the stators 35R, 35L of both electric motors 30R, 30L. That is, both electric motors 30R, 30L may be cooled by water, and in that case, the drive device 20 may include a first water cooling circuit that cools the right electric motor 30R and a second water cooling circuit that cools the left electric motor 30L. In this modification, the pump control device 70 may control the radiator pump 16 instead of the oil pump 36L. That is, in this modification, the first water cooling circuit is an example of the "first heat circuit", and the second water cooling circuit is an example of the "second heat circuit". Furthermore, the radiator heat circuit 18 is an example of the "at least partial section", and the radiator pump 16 is an example of the "at least one pump".

Technology elements described in the present specification or the drawings exert technical utility independently or by various combinations, and are not limited to combinations described in the claims at the time of the filing. Further, the technology exemplified in the present specification or the drawings can concurrently achieve a plurality of purposes, and has technical utility simply by achieving one of the purposes.

## Claims

1. A drive device (20; 120) configured to drive a pair of right and left drive wheels of a vehicle, the drive device (20; 120) comprising:
a first electric motor configured to drive at least a first drive wheel of the pair of right and left drive wheels;
a second electric motor configured to drive at least a second drive wheel of the pair of right and left drive wheels;
a first electric power control device configured to control electric power between an electric storage device of the vehicle and at least the first electric motor;
an electric power supply circuit (11) electrically connected with a neutral point (NP) of the first electric motor and configured to supply charging electric power to the neutral point (NP), the charging electric power being supplied from an external electric power source (7);
a first heat circuit configured to perform heat exchange with the first electric motor;
a second heat circuit configured to perform heat exchange with the second electric motor, at least a partial section of the second heat circuit being a section in common with the first heat circuit;
at least one pump configured to cause a heat medium to circulate through the first heat circuit and the second heat circuit; and
a pump control device configured to control the at least one pump, wherein
the pump control device (70) is configured to cause the heat medium to circulate through both the first heat circuit and the second heat circuit, by operating the at least one pump in at least a part of a charging period during which the electric power supply circuit (11) supplies the charging electric power to the neutral point (NP) of the first electric motor.

2. The drive device (20;120) according to claim 1, wherein:
the at least one pump includes
a first pump configured to cause the heat medium to circulate through the first heat circuit, and
a second pump configured to cause the heat medium to circulate through the second heat circuit; and
the pump control device (70) is configured to cause the heat medium to circulate through both the first heat circuit and the second heat circuit, by operating both the first pump and the second pump in at least a part of the charging period.

3. The drive device (20; 120) according to claim 2, wherein the pump control device (70) is configured to stop the operation of the second pump even in the charging period, when a temperature difference between the first electric motor and the second electric motor is less than a predetermined threshold.

4. The drive device (20; 120) according to claim 2, wherein the pump control device (70) is configured to stop the operation of the second pump even in the charging period, when a temperature of the second electric motor is higher than a temperature of the heat medium.

5. The drive device (20; 120) according to claim 2, wherein the pump control device (70) is configured to change an output of the second pump in the charging period, depending on a temperature difference between the first electric motor and the second electric motor.

6. The drive device (20; 120) according to claim 1, further comprising a casing (21) that houses at least the first electric motor and the second electric motor, wherein
the at least partial section is positioned in the casing (21).

7. The drive device (20; 120) according to claim 6, further comprising:
a first heat exchanger provided on the first heat circuit and configured to perform heat exchange between the first heat circuit and a third heat circuit provided in the vehicle; and
a second heat exchanger disposed on the second heat circuit and configured to perform heat exchange between the second heat circuit and the third heat circuit, wherein
the third heat circuit is configured to pass through a radiator (12;22) of the vehicle.

8. The drive device (20; 120) according to claim 6, further comprising:
a first dynamic power transmission mechanism configured to transmit dynamic power of the first electric motor to at least the first drive wheel of the pair of right and left drive wheels; and
a second dynamic power transmission mechanism configured to transmit dynamic power of the second electric motor to at least the second drive wheel of the pair of right and left drive wheels, wherein
the heat medium is lubricating oil for a first gear of the first dynamic power transmission mechanism and a second gear of the second dynamic power transmission mechanism.

9. The drive device (20; 120) according to claim 1, wherein:
the first electric motor is configured to drive the first drive wheel of the pair of right and left drive wheels; and
the second electric motor is configured to drive the second drive wheel of the pair of right and left drive wheels.
